# EUROPÄISCHE PATENTSCHRIFT

(11) **EP 2 206 073 B1**
(45) Veröffentlichungstag und Bekanntmachung des Hinweises auf die Patenterteilung: **16.03.2016**
(21) Anmeldenummer: 08841153.3
(22) Anmeldetag: 15.10.2008
(51) Int. Cl.: G06K 9/00, B60Q 1/02

(54) **VERFAHREN ZUR UNTERSCHEIDUNG VON FAHRBAHNRANDREFLEKTOREN UND FAHRZEUGLICHTERN BEI DUNKELHEIT**
METHOD FOR DIFFERENTIATING BETWEEN VERGE REFLECTORS AND VEHICLE HEADLIGHTS IN THE DARK
PROCÉDÉ POUR DIFFÉRENCIER DES RÉFLECTEURS DE BORDS DE VOIES DE CIRCULATION ET DES FEUX DE POSITION DE VÉHICULE, DANS L'OBSCURITÉ

(30) Priorität: 25.10.2007 DE 102007051386
(43) Veröffentlichungstag der Anmeldung: 14.07.2010
(73) Patentinhaber: ADC Automotive Distance Control Systems GmbH, 88131 Lindau (DE)
(72) Erfinder: WALTER, Michael, 9435 Heerbrugg (CH); FECHNER, Thomas, 88142 Wasserburg (DE)
(74) Vertreter: Büchner, Jörg
(86) Internationale Anmeldenummer: PCT/DE2008/001687
(87) Internationale Veröffentlichungsnummer: WO 2009/052788

(56) Entgegenhaltungen:
- EP-A- 1 837 803
- US-A1- 2004 069 931
- US-A1- 2006 106 518

## Beschreibung

Die Erfindung betrifft ein Verfahren zur Unterscheidung von Reflektoren am Fahrbahnrand und Fahrzeuglichtern gemäß dem Oberbegriff von Anspruch 1 zum Einsatz in Kraftfahrzeugen.

Das Dokument WO 2004/034183 A2 offenbart ein Verfahren zur automatischen Lichtsteuerung für ein Kraftfahrzeug mit einem in die Fahrzeugumgebung ausgerichteten Kamerasensor, das zumindest eine Kategorie für selbststrahlende bewegte Lichter, insbesondere Fahrzeuglichter vorsieht, wobei eine Bilderfolge der Fahrzeugumgebung aufgenommen wird, zumindest ein Lichtpunkt in der Bilderfolge getrackt (verfolgt) und die Intensität eines verfolgten Lichtpunkts in zumindest zwei Bildern bestimmt wird, die gemessene Intensität analysiert wird, aus den Intensitätswerten die Lichter anderer Fahrzeuge erkannt werden und Frontscheinwerfer so gesteuert werden, dass Fahrer anderer Fahrzeuge nicht geblendet werden. Auch eine Analyse der Bewegung eines Lichtpunkts wird als Grundlage für die Kategorisierungworgeschlagen.

Es zeigt sich, dass es Reflektoren gibt, die im Kamerabild ähnliche Intensitäten wie Fahrzeuglichter erzeugern können. Dies kann zu Fehlentscheidungen führen, die die Sicherheit oder zumindest den Komfort bei einer automatischen Lichtsteuerung erheblich beeinträchtigen. Auch die Berücksichtigung der Bewegung von Lichtpunkten schützt nicht in jedem Fall vor Fehlklassifikationen.

Die EP 1 837 803 A2 zeigt ein Verfahren gemäß des Oberbegriffs des Anspruchs 1. Beim Verfolgen von Lichtpunkten über mehrere Bilder einer Bilderfolge werden statistische Informationen zu Form, Bewegung, Helligkeit, räumlicher Ausdehnung und Farbe gesammelt. Basierend auf diesen statistischen Informationen werden die Lichtpunkte durch einen vortrainierten Klassifikator klassifiziert.

Die US 2006/0106518 A1 zeigt Verbesserungen für Fahrzeugkamerasysteme und eine kamerabasierte Lichtsteuerung. Lichtpunkte werden als Helligkeitsmaxima im Kamerabild ermittelt. Verschiedene Eigenschaften der Lichtpunkte wie Helligkeit, Farbe, Position, Breite, Höhe und Bewegung werden bestimmt. Die Werte dieser Parameter werden mit statistischen Methoden analysiert, um zu bestimmen, ob die Lichtpunkte Vorderlichtern oder Rücklichtern anderer Fahrzeuge entsprechen oder anderen Lichtquellen, die nicht von Fahrzeugen stammen, wie Schildern, Reflektoren oder anderen stationären Lichtern.

Aufgabe der vorliegenden Erfindung ist ein Verfahren, das eine erhöhte Zuverlässigkeit der Unterscheidung zwischen Reflektoren und Fahrzeuglichtern bietet.

Die Aufgabe wird durch ein Verfahren mit den Merkmalen des Anspruchs 1 gelöst. Vorteilhafte Weiterbildungen der Erfindung ergeben sind aus den Unteransprüchen, wobei auch Kombinationen und Weiterbildungen einzelner Merkmale miteinander denkbar sind.

Der Grundgedanke der Erfindung ist es, die Tatsache auszunutzen, dass Reflektoren am Fahrbahnrand angeordnet sind und die Lichter von entgegenkommenden oder vorausfahrenden Fahrzeugen in den allermeisten Fällen auf der Fahrbahn. Dadurch können auf dem Kamerabild Regionen bestimmt werden, in denen es wahrscheinlicher ist, Reflektoren zu finden und Regionen, in denen es wahrscheinlicher ist, Fahrzeuglichter zu finden. Dieses Wissen wird zur Unterscheidung und Identifizierung von Lichtpunkten zu Hilfe gezogen.

Ein erfindungsgemäßes Verfahren zur Unterscheidung und Identifizierung von Reflektoren am Fahrbahnrand und Fahrzeuglichtern zum Einsatz in einer automatischen Lichtsteuerung in einem Fahrzeug umfasst einen in die Fahrzeugumgebung ausgerichteten Kamerasensor. Der Kamerasensor nimmt eine Bilderfolge der Fahrzeugumgebung auf. Lichtpunkte werden innerhalb der Bilderfolge gefunden und zeitlich verfolgt (getrackt). Für jeden Lichtpunkt wird nachträglich entschieden, ob der Lichtpunkt ein Fahrzeuglicht oder einen Reflektor am Fahrbahnrand als Lichtquelle besitzt. Die nachträgliche Identifizierung eines Lichtpunkts kann insbesondere anhand seiner maximalen Intensität und/oder seiner Lebensdauer erfolgen.

Aus der Position der gefundenen Lichtpunkte wird eine statistische Karte für das gesamte Kamerabild ermittelt. Die statistische Karte ergibt sich aus der Art und den Positionen der bereits gefundenen und identifizierten Lichtpunkte. Die statistische Karte umfasst Bereiche bzw. Sektoren, die vorrangig mit Reflektoren belegt sind, und Bereiche bzw. Sektoren, die vorrangig mit vorausfahrenden oder entgegenkommenden Fahrzeugen belegt sind.

Alle Lichtquellen, die im weiteren Verlauf innerhalb der mit Reflektoren belegten Bereiche gefunden werden, werden als potentielle Reflektoren identifiziert. Potentieller Reflektor bedeutet hierbei, dass ein solcher Lichtpunkt mit höherer Wahrscheinlichkeit als Reflektor identifiziert wird, als ein Lichtpunkt, der nicht innerhalb eines mit Reflektoren belegten Bereichs gefunden wurde. Wenn kein weiteres Unterscheidungskriterium vorliegen oder berücksichtigt werden sollte, würde ein Lichtpunkt, der innerhalb eines mit Reflektoren belegten Bereichs gefunden wurde, als Reflektor identifiziert. Alle Lichtquellen, die innerhalb der mit Fahrzeuglichtern belegten Bereiche liegen, werden entsprechend als potentielle Fahrzeuglichter identifiziert.

Gemäß einer bevorzugten Ausführungsform werden Lichtpunkte, die im Bild auf einer Linie mit weiteren Lichtpunkten angeordnet sind, als potentielle Reflektoren identifiziert.

In einem weiteren Ausführungsbeispiel werden Lichtpunkte, deren räumliche Anordnung einer periodischen Anordnung von Lichtquellen im realen Raum entspricht, als potentielle Reflektoren identifiziert.

In einer vorteilhaften Ausgestaltung der Erfindung wird durch Berücksichtigung der statischen bzw. dynamischen Kameraeinbaulage eine statistische Karte in Weltkoordinaten erstellt. Die statistische Karte in Weltkoordinaten umfasst Bereiche, die vorrangig mit Reflektoren belegt sind, und Bereiche, die vorrangig mit vorausfahrenden oder entgegenkommenden Fahrzeugen belegt sind.

Die Entscheidung, ob der Lichtpunkt ein Fahrzeuglicht oder einen Reflektor als Lichtquelle besitzt, kann zudem unter Berücksichtigung der Richtung und der Länge eines Verschiebungsvektors für den verfolgten Lichtpunkt getroffen werden. Der Verschiebungsvektor gibt an, um welchen Betrag (Länge) und in welche Richtung ein sich ein Lichtpunkt von einem Bild auf das nachfolgende Bild verschoben hat.

Bei der Ermittlung der Verschiebungsvektoren kann die Geschwindigkeit des eigenen Fahrzeugs berücksichtigt werden. Werden die Verschiebungsvektoren entsprechend skaliert, ergibt sich eine Geschwindigkeits-invariante Verteilung der Verschiebungsvektoren. Reflektoren erkennt man daran, dass die Verschiebungsvektoren der entsprechenden Lichtpunkte im Wesentlichen der Fahrzeugbewegung entsprechen. In der Geschwindigkeits-invarianten Darstellung sind Verschiebungsvektoren von Reflektoren theoretisch gleich Null.

Gemäß einer bevorzugten Ausführungsform wird der Zeitpunkt der Entscheidung, ob es sich bei der Lichtquelle um ein Fahrzeug oder einen Reflektor handelt, in Abhängigkeit von der Position, an der der Lichtpunkt gefunden wird, und von der Intensität des Lichtpunkts verzögert oder beschleunigt.

Der Einfluss der statistischen Karte und der Einfluss von weiteren Kriterien wie der aktuellen Intensität eines Lichtpunkts, der linienförmigen und/oder periodischen Anordnung von Lichtpunkten auf die Unterscheidung und Identifizierung kann unterschiedlich stark gewichtet werden. Gibt es beispielsweise nur einen Anhaltspunkt, der für ein Fahrzeuglicht spricht, sollte eine schnelle Entscheidung getroffen werden, damit die automatische Lichtsteuerung abblendet, um andere Fahrer nicht zu blenden. Gibt es dagegen überwiegend Anhaltspunkte, die für einen Reflektor sprechen, so kann die Entscheidung herausgezögert werden, bis die Entscheidungsgrundlage zuverlässiger ist.

Des Weiteren kann die aus kontinuierlichen oder diskreten Bereichen bestehende Karte mit einem Vergessensfaktor versehen werden, um Änderungen des Straßenverlaufs und/oder der Randbebauung zu berücksichtigen.

In einer vorteilhaften Ausgestaltung ist der Lenk- und/oder der Gierwinkel beispielsweise aus Sensordaten bekannt und die Karte in ihrer Krümmung an den Straßenverlauf angepasst wird.

In einer Weiterbildung der Erfindung ist eine sensorbasierte Spurfindung vorgesehen, durch die Informationen über die vorausliegende Fahrspur geliefert werden. Die Spurfindung kann beispielsweise auf Daten eines Radar-, Lidar- oder eines Kämerasensors basieren. Auf Basis dieser Informationen über den vorausliegenden Krümmungsverlauf der Fahrbahn wird die Lage der Bereiche, in denen sich potentielle Reflektoren befinden, auf der statistischen Karte angepasst.

Alternativ kann der Fahrspurverlauf auch unter Einsatz eines GPS-Empfängers und einer digitalen Straßenkarte ermittelt werden, die beispielsweise in einem Navigationsgerät vorliegen. Die Informationen aus dem Navigationsgerät können auch mit denen der sensorbasierten Spurfindung kombiniert werden.

Die statistische Karte kann zudem an die von der Spurfindung ermittelte Breite der Fahrbahn bzw. an das ermittelte aktuelle Fahrverhalten angepasst werden. Das aktuelle Fahrverhalten umfasst hierbei einen Spurwechsel oder Änderungen des Gierwinkels.

Die Erfindung beinhaltet zudem eine Vorrichtung zur Unterscheidung und Identifizierung von Reflektoren am Fahrbahnrand und Fahrzeuglichtern in einem Fahrzeugumfeld. Die Vorrichtung umfasst einen Kamerasensor und eine Auswerteeinheit, die die vom Kamerasensor erfassten Bilddaten durch eines der vorgenannten Verfahren auswertet.

Der Vorteil der Erfindung liegt in der Steigerung der Unterscheidungssicherheit zwischen Reflektoren und Fahrzeuglichtern. Dadurch werden Fehlfunktionen der automatischen Lichtsteuerung verhindert, Fahrkomfort und Sicherheit werden erhöht. Die Zeit, bis eine Unterscheidung getroffen werden kann, wird durch den Einsatz einer statistischen Karte herabgesetzt.

Im Folgenden wird die Erfindung anhand von Ausführungsbeispielen und Zeichnungen näher erläutert.
Fig. 1 zeigt ein Kamerabild mit Sektoreinteilung zur Erläuterung der Erzeugung einer statistischen Karte.
Fig. 2 zeigt eine Sektoreinteilung mit kleineren rechteckigen Sektoren für einen kurvenreichen Straßenverlauf.
Fig. 3 zeigt die Anpassung von Kartensektoren an einen von einer Spurfindung ermittelten Straßenverlauf.

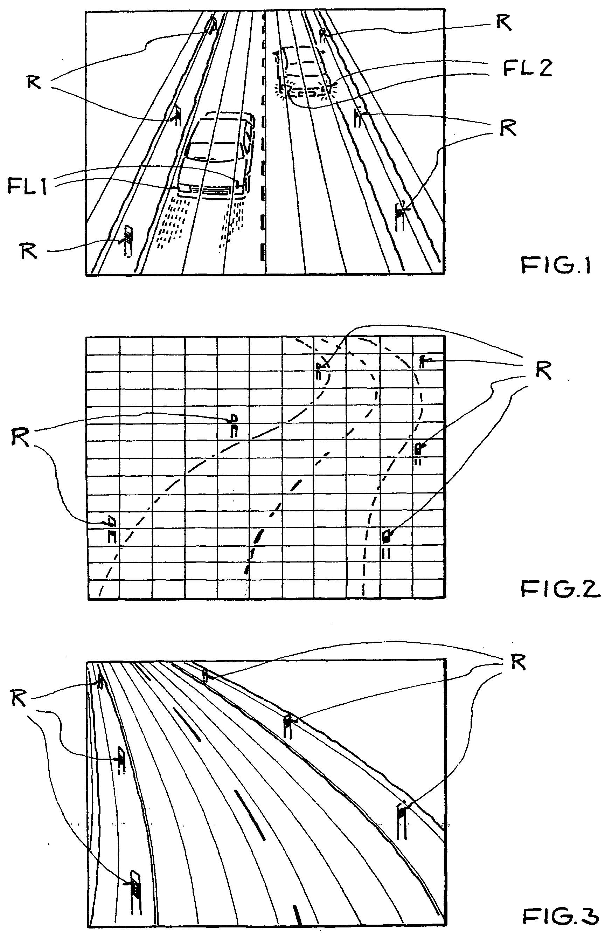

In Fig. 1 ist schematisch ein vom Kamerasensor aufgenommenes Bild dargestellt. Das Bild zeigt eine Fahrbahn, ein entgegenkommendes und ein vorausfahrendes Fahrzeug (FL1, FL2) sowie Reflektoren (R), die am Fahrbahnrand angeordnet sind. Bei Dunkelheit sind die Fahrzeuge und Straßenbegrenzungspfosten nur noch als Lichtpunkte zu erkennen. Das Bild wird in Sektoren aufgeteilt. Im Beispiel von Fig. 1 sind die Sektoren durch in Fahrtrichtung verlaufende gleich breite (z.B. 1m breite) Streifen definiert. Diese Sektoreneinteilung ist besonders für gerade Fahrbahnabschnitte geeignet. Der Kamerasensor nimmt eine Folge von Bildern auf. Lichtpunkte werden innerhalb der Bilderfolge gefunden und getrackt (zeitlich verfolgt). Für jeden Lichtpunkt wird nachträglich entschieden, ob der Lichtpunkt ein Fahrzeuglicht (FL1, FL2) oder einen Reflektor (R) am Fahrbahnrand als Lichtquelle besitzt. Diese Unterscheidung kann auf Intensitätsverläufen, Bewegungsmustern oder anderen geeigneten Parametern erfolgen.

Es wird eine Häufigkeitsverteilung aufgestellt, in welchem Sektor wie häufig ein Reflektor (R) bzw. ein Fahrzeuglicht (FL1, FL2) identifiziert wurde. Aus dieser Häufigkeitsverteilung ergibt sich die statistische Karte für das gesamte Kamerabild, das sich aus den Sektoren ergibt. Der statistischen Karte ist für jeden Sektor zu entnehmen, wie häufig dort Reflektoren (R) identifiziert bzw. wie häufig Lichter von vorausfahrenden (FL2) oder entgegenkommenden (FL1) Fahrzeugen identifiziert worden sind.

Eine statistische Karte für die Situation aus Fig. 1 würde neutrale Sektoren (ganz links, ganz rechts) ergeben, Sektoren mit hohem Reflektorvorkommen (R) (linker und rechter Fahrbahnrandsenktor) und Sektoren mit hohem Fahrzeuglichtvorkommen (FL1, FL2) (Sektoren auf der Fahrbahn).

Wird vom Kamerasensor ein Bild mit einem neuen Lichtpunkt aufgezeichnet und wird der Lichtpunkt von einer Auswerteeinheit gefunden, so wird aus der statistischen Karte ermittelt, wie häufig im Sektor, in dem der Lichtpunkt gefunden wurde, Reflektoren (R) bzw. Fahrzeuglichter (FL1, FL2) aufgetreten sind. Sind im Sektor mehr Reflektoren (R) als Fahrzeuglichter (FL1, FL2) aufgetreten, wird der Lichtpunkt als potentieller Reflektor (R) identifiziert und umgekehrt.

Sind im Sektor gleich oder ähnlich viele Reflektoren (R) wie Fahrzeuglichter (FL1, FL2) aufgetreten, wird mit der Identifizierung gewartet, bis weitere Merkmale des Lichtpunkts eine zuverlässige Identifizierung zulassen. Weitere Merkmale zur Identifizierung können neben Intensitätsverläufen auch die geometrische Anordnung oder die Verschiebungsvektoren von Lichtpunkten sein.

Reflektoren (R) sind wie in Fig. 1 dargestellt häufig auf einer Linie mit weiteren Reflektoren (R) angeordnet. Die räumliche Anordnung von Reflektoren (R) entspricht häufig einer periodischen Anordnung von Reflektoren (R) mit gleichmäßigen Abständen zwischen zwei Reflektoren (R) im realen Raum.

Eine Analyse der Verschiebungsvektoren von Lichtpunkten wird durch Kenntnis der Geschwindigkeit des eigenen Fahrzeugs erleichtert. In diesem Fall ist bekannt, welcher Bildpunkt einer unbewegten Umgebung sich wie stark verschiebt. Somit kann ein ermittelter Verschiebungsvektor in das System des bewegten Fahrzeugs transformiert werden. Die derart transformierten Verschiebungsvektoren werden auch als geschwindigkeits-invariant bezeichnet. Unter den geschwindigkeits-invarianten Verschiebungsvektoren gibt es solche, die in Fahrtrichtung zeigen, solche, die entgegen der (eigenen) Fahrtrichtung zeigen, und solche, die keine Bewegung darstellen. Diese entsprechen vorausfahrenden Fahrzeugen (FL2), entgegenkommenden Fahrzeugen (FL1) und stationären Reflektoren (R).

In Fig. 2 ist das Kamerabild in Form eines Gitternetzes unterteilt. Die Sektoren sind rechteckig. Die im Vergleich zu Fig. 1 feinere Unterteilung in eine größere Anzahl an Sektoren bietet den Vorteil, dass eine entsprechende statistische Karte einem kurvenreichen Straßenverlauf Rechnung tragen kann. Die statistische Karte wird in der bereits beschriebenen Weise generiert und entspricht einer Sammlung von Trajektorien von identifizierten Lichtpunkten mit der Auflösung des Gitternetzes.

In Fig. 3 ist beispielhaft dargestellt, wie die Sektoren an den Fahrbahnverlauf angepasst werden. Der Fahrbahnverlauf wird von einer Radar-, Lidar- oder kamerabasierten Spurfindung ermittelt. Auf Basis der Informationen über den vorausliegenden Krümmungsverlauf der Fahrbahn aus der Spurfindung wird die Lage der Sektoren, in denen sich potentielle Reflektoren (R) bzw. Fahrzeuglichter (FL1, FL2) befinden, auf der statistischen Karte angepasst. Die Darstellung in Fig. 3 zeigt eine Linkskurve. Entsprechend sind die Sektoren, die wiederum parallelen Streifen mit vorgegebener Breite entsprechen, um denselben Kurvenradius gekrümmt. Alle linken Reflektoren (R) und alle rechten Reflektoren (R) liegen jeweils in einem Sektor. Bei einer anderen Sektorbreite könnten es auch jeweils zwei oder drei Sektoren sein, in denen sich Reflektoren (R) befinden. In den Sektoren zwischen den mit Reflektoren (R) belegten Sektoren werden dagegen häufiger Fahrzeuglichter (FL1, FL2) gefunden werden.

## Patentansprüche

1. Verfahren zur Unterscheidung und Identifizierung von Reflektoren (R) am Fahrbahnrand und Fahrzeuglichtern (FL1, FL2) zum Einsatz in einem Fahrzeug mit einen in die Fahrzeugumgebung ausgerichteten Kamerasensor, wobei
- eine Bilderfolge der Fahrzeugumgebung aufgenommen wird,
- Lichtpunkte innerhalb der Bilderfolge gefunden und zeitlich verfolgt (getrackt) werden,
**dadurch gekennzeichnet, dass**
- nachträglich zum zeitlichen Verfolgen innerhalb der Bilderfolge gefundener Lichtpunkte für jeden Lichtpunkt entschieden wird, ob der Lichtpunkt ein Fahrzeuglicht (FL1, FL2) oder einen Reflektor (R) als Lichtquelle besitzt,
- aus der Position der gefundenen Lichtpunkte eine statistische Karte für das gesamte Kamerabild ermittelt wird, die Bereiche umfasst, die vorrangig mit Reflektoren (R) belegt sind, und Bereiche, die vorrangig mit vorausfahrenden (FL2) oder entgegenkommenden (FL1) Fahrzeugen belegt sind,
- alle Lichtquellen, die innerhalb der mit Reflektoren (R) belegten Bereiche gefunden werden, als potentielle Reflektoren (R) identifiziert werden,
- alle Lichtquellen, die innerhalb der mit Fahrzeuglichtern (FL1, FL2) belegten Bereiche liegen, als potentielle Fahrzeuglichter (FLI, FL2) identifiziert werden und
- eine sensorbasierte Spurfindung vorgesehen ist, durch die Informationen über die vorausliegende Fahrspur geliefert werden und so die Lage der Bereiche auf der Karte, in denen sich potentielle Reflektoren (R) befinden, den Informationen über den vorausliegenden Krümmungsverlauf der Fahrbahn entsprechend angepasst wird.

2. Verfahren nach Anspruch 1, **dadurch gekennzeichnet, dass** Lichtpunkte, die im Bild auf einer Linie mit weiteren Lichtpunkten angeordnet sind, als potentielle Reflektoren (R) identifiziert werden.

3. Verfahren nach einem der vorgenannten Ansprüche, **dadurch gekennzeichnet, dass** die Entscheidung, ob der Lichtpunkt ein Fahrzeuglicht (FL1, FL2) oder einen Reflektor (R) als Lichtquelle besitzt, unter Berücksichtigung der Richtung und der Länge eines Verschiebungsvektors für den verfolgten Lichtpunkt getroffen wird.

4. Verfahren nach einem der vorgenannten Ansprüche, **dadurch gekennzeichnet, dass** der Zeitpunkt der Entscheidung, ob es sich bei der Lichtquelle um ein Fahrzeug (FL1, FL2) oder einen Reflektor (R) handelt, in Abhängigkeit von der Position, an der der Lichtpunkt gefunden wird, und von der Intensität des Lichtpunkts verzögert oder beschleunigt wird.

5. Verfahren nach einem der vorgenannten Ansprüche, **dadurch gekennzeichnet, dass** die aus Bereichen bestehende Karte mit einem Vergessensfaktor versehen wird, um Änderungen des Strassenverlaufs und/oder der Randbebauung zu berücksichtigen.

6. Verfahren nach einem der vorgenannten Ansprüche, **dadurch gekennzeichnet, dass** die statistische Karte an die von der Spurfindung ermittelte Breite der Fahrbahn angepasst wird.

7. Verfahren nach einem der vorgenannten Ansprüche, **dadurch gekennzeichnet, dass** die statistische Karte an das von der Spurfindung ermittelte aktuelle Fahrverhalten angepasst wird.

8. Vorrichtung zur Unterscheidung und Identifizierung von Reflektoren (R) am Fahrbahnrand und Fahrzeuglichtern (FL1, FL2) in einem Fahrzeugumfeld umfassend einen Kamerasensor und eine Auswerteeinheit, **dadurch gekennzeichnet, dass** die Auswerteeinheit die vom Kamerasensor erfassten Bilddaten durch ein Verfahren entsprechend einem der Ansprüche 1 bis 7 auswertet.

## Claims

1. A method for identifying and differentiating between reflectors (R) on the verge of the road and vehicle lights (FL1, FL2) for use in a vehicle with a camera sensor oriented towards the vehicle surroundings, wherein
- a sequence of images of the vehicle surroundings is recorded,
- light spots are found in the sequence of images and temporally monitored (tracked),
**characterized in that**
- following the temporal monitoring of light spots found in the sequence of images it is decided, for each light spot, whether the source of the light spot is a vehicle light (FL1, FL2) or a reflector (R),
- a statistical map for the entire camera image is determined from the position of the light spots found, said map having regions which are predominantly occupied by reflectors (R), and regions which are predominantly occupied by vehicles driving ahead (FL2) or by oncoming vehicles (FL1),
- all light sources found in the regions occupied by reflectors (R) are identified as potential reflectors (R),
- all light sources found in the regions occupied by vehicle lights (FL1, FL2) are identified as potential vehicle lights (FL1, FL2), and
- a sensor-based lane detection system is provided which supplies information about the lane lying ahead so that the position of the regions on the map in which potential reflectors (R) are located is adapted according to the information about the roadway curvature lying ahead.

2. The method according to Claim 1, **characterized in that** light spots which are arranged, in the image, in line with further light spots are identified as potential reflectors (R).

3. The method according to any one of the preceding claims, **characterized in that** the decision whether the light source of the light spot is a vehicle light (FL1, FL2) or a reflector (R) is made, taking account of the direction and the length of a displacement vector for the tracked light spot.

4. The method according to any one of the preceding claims, **characterized in that** the point in time of the decision whether the light source is a vehicle (FL1, FL2) or a reflector (R) is delayed or accelerated as a function of the position where the light spot is found and of the intensity of the light spot.

5. The method according to any one of the preceding claims, **characterized in that** the map consisting of regions is provided with a forgetting factor, in order to take account of changes in the course of the road and/or the roadside structures.

6. The method according to any one of the preceding claims, **characterized in that** the statistical map is adapted to the roadway width determined by the lane detection system.

7. The method according to any one of the preceding claims, **characterized in that** the statistical map is adapted to the current driving behavior determined by the lane detection system.

8. A device for identifying and differentiating between reflectors (R) on the verge of the road and vehicle lights (FL1, FL2) in vehicle surroundings comprising a camera sensor and an evaluation unit, **characterized in that** the evaluation unit evaluates the image data acquired by the camera sensor by means of a method according to any one of Claims 1 to 7.

## Revendications

1. Procédé pour distinguer et identifier des réflecteurs (R) sur le bord de voies de circulation et des feux de position (FL1, FL2), destiné à être utilisé dans un véhicule avec un capteur de caméra orienté vers l'environnement du véhicule,
- une suite d'images de l'environnement du véhicule étant prise,
- des points lumineux étant trouvés à l'intérieur de la suite d'images et suivis dans le temps (poursuivis),
**caractérisé en ce que**,
- postérieurement au suivi dans le temps de points lumineux trouvés à l'intérieur de la suite d'images, il est décidé, pour chaque point lumineux, si le point lumineux possède un feu de position (FL1, FL2) ou un réflecteur (R) en tant que source de lumière,
- à partir de la position des points lumineux trouvés, il est établi pour l'ensemble de l'image de caméra une carte statistique qui comprend des zones qui sont prioritairement occupées par des réflecteurs (R), et des zones qui sont prioritairement occupées par des véhicules qui précèdent (FL2) ou qui viennent en sens inverse (FL1),
- toutes les sources de lumière qui sont trouvées à l'intérieur des zones occupées par des réflecteurs (R) sont identifiées en tant que réflecteurs (R) potentiels,
- toutes les sources de lumière qui sont situées à l'intérieur des zones occupées par des feux de position (FL1, FL2) sont identifiées en tant que feux de position (FL1, FL2) potentiels et
- il est prévu une identification de file à base de capteur par le biais de laquelle des informations sont fournies sur la file de circulation qui précède, et ainsi la position des zones sur la carte dans lesquelles se trouvent des réflecteurs (R) potentiels est adaptée en conséquence aux informations sur le tracé de courbure qui précède de la voie de circulation.

2. Procédé selon la revendication 1, **caractérisé en ce que** des points lumineux qui sont disposés dans l'image sur une ligne avec d'autres points lumineux sont identifiés en tant que réflecteurs (R) potentiels.

3. Procédé selon l'une des revendications précitées, **caractérisé en ce que** la décision déterminant si le point lumineux possède un feu de position (FL1, FL2) ou un réflecteur (R) en tant que source de lumière est prise en prenant en compte la direction et la longueur d'un vecteur de déplacement pour le point lumineux suivi.

4. Procédé selon l'une des revendications précitées, **caractérisé en ce que** le moment de la décision déterminant s'il s'agit, pour la source de lumière, d'un véhicule (FL1, FL2) ou d'un réflecteur (R) est retardé ou accéléré en fonction de la position dans laquelle le point lumineux est trouvé et de l'intensité du point lumineux.

5. Procédé selon l'une des revendications précitées, **caractérisé en ce que** la carte composée de zones est munie d'un facteur d'oubli afin de prendre en compte des modifications du tracé routier et/ou de l'aménagement du bord de voie.

6. Procédé selon l'une des revendications précitées, **caractérisé en ce que** la carte statistique est adaptée à la largeur de la voie de circulation déterminée par l'identification de la file.

7. Procédé selon l'une des revendications précitées, **caractérisé en ce que** la carte statistique est adaptée au comportement de conduite actuel déterminé par l'identification de la file.

8. Dispositif pour distinguer et identifier des réflecteurs (R) sur le bord de voies de circulations et des feux de position (FL1, FL2) dans un environnement de véhicule, comprenant un capteur de caméra et une unité d'analyse, **caractérisé en ce que** l'unité d'analyse analyse les données d'image captées par le capteur de caméra par un procédé selon une des revendications 1 à 7.
